# EUROPEAN PATENT APPLICATION

(11) **EP 1 170 885 A1**
(43) Date of publication of application: **09.01.2002**
(21) Application number: 01902792.9
(22) Date of filing: 07.02.2001
(51) Int. Cl.: H04B 7/26, H04B 1/707

(54) **FADING PITCH MEASURING APPARATUS, FADING PITCH MEASURING METHOD AND PORTABLE INFORMATION TERMINAL USING THEM**

(30) Priority: 14.02.2000 JP 2000034909
(71) Applicant: MITSUBISHI DENKI KABUSHIKI KAISHA, Tokyo 100-8310 (JP)
(72) Inventor: FUKADA, Hiroyuki, Chiyoda-ku, Tokyo 100-8310 (JP)
(74) Representative: Sajda, Wolf E., Dipl.-Phys.
(86) International application number: JP0100845
(87) International publication number: WO0159956

(57) **Abstract**

In a CDMA-system based mobile station or an equivalent, to provide a high-precision measurement of a fading pitch without using a plurality of branches (antennas) for receiving a plurality of reception waves which may appear to have no correlation to one another, a plurality of despreading devices 5a, 5b, 5c, 5d connected to a shared reception system is provided for performing despreading for each multipath. Signals outputted from the plurality of despreading devices 5a, 5b, 5c, 5d are synthesized with a phase difference in each multipath being maintained by a first synthesizer 6 to obtain a synthesized signal. A fading pitch fD is detected based upon the synthesized signal by a fading pitch detector 7

## Description

### Technical Field

The present invention relates to a fading pitch detection apparatus in a mobile communication system and the method for detecting a fading pitch, and a mobile information terminal using the apparatus and the method.

### Background Art

In a mobile communication system, fading means the variations of a reception signal corresponding to changes in the speed of a mobile terminal and a standing wave. Such controls as mentioned below may be achieved based upon the fading pitch thereof. For example, for controlling transmission power, a transmission power control period may be determined based upon the fading pitch. As a result, transmission power may be controlled efficiently to deal with variations in the reception level of the signal caused by the fading.

Furthermore, in a CDMA (Code Division Multiple Access) -system based communication, a reception symbol is detected by calculating the carrier wave phase by weighting and synthesizing transmission line estimation values obtained from a plurality of pilot symbols. In this case, an optimal weight may be selected based upon the fading pitch.

Still more, in the CDMA-system based communication, the timing of an incoming path is detected by calculating a correlation between a reception signal and a specific code and then averaging this correlation. In this case, an averaging time, a measurement interval, and the like in the measurement of the correlation may be optimized based upon the fading pitch. As a result, power consumption may be reduced.

Still further, with a mobile terminal, the moving speed is obtained by the product of a fading pitch multiplied by the wavelength of a carrier wave. Therefore, the moving speed of a terminal may be obtained by detecting the fading pitch, which may contribute to establishing various types of wireless channels.

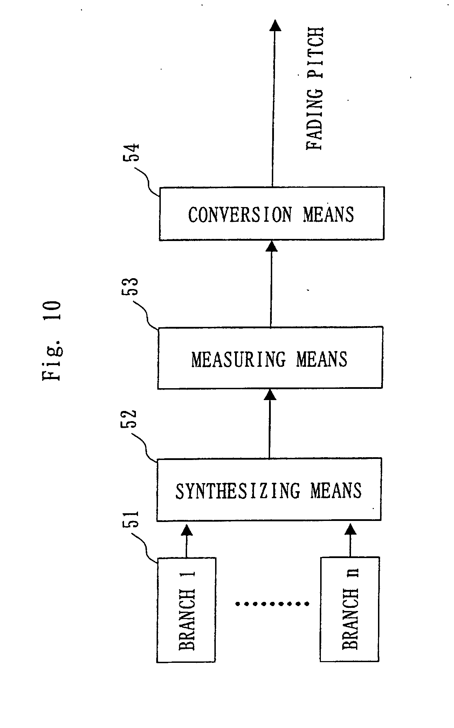

As a conventional fading pitch detection apparatus, Fig. 10 shows a first conventional art as an example. Fig. 10 is a block diagram of a conventional fading frequency (pitch) detection apparatus, which is disclosed in Japanese Unexamined Patent Publication No. Hei9-135215. Referring to the figure, a reference numeral 51 denotes branches 1 to n for receiving a multiple number of reception waves which may appear to have no correlation to one another. The multiple number of branches 51 correspond to a plurality of antennas, for example. A reference numeral 52 denotes a synthesizing means, which is configured by hybrid circuits, for generating a synthesized reception wave by synthesizing the electric-field strength of a reception wave arriving at the respective branches 51 with a proper phase difference for maintaining the constancy of the distribution of the electric-field strength. With the thus generated synthesized reception wave, the distribution of the electric-field strength is maintained, which is relative to the multiple number of reception waves. In addition to that, all the fading accompanying those reception waves are multiplexed, so that a seeming fading pitch becomes higher than the fading pitch of an actually arriving reception wave.

A reference numeral 53 denotes a measuring means for obtaining a fading pitch by calculating the number of times per unit time the fading occurs with the synthesized reception wave. A reference numeral 54 denotes a conversion means for calculating the fading pitch of a reception wave actually arriving at the respective branches 51 by multiplying the obtained fading pitch by a predetermined numeric value. The predetermined numeric value is the ratio of the fading pitch of the synthesized reception wave to the fading pitch of the reception wave arriving at one of the branches. The predetermined numeric value is obtained through actual measurement or simulation based upon the wireless transmission line model of the reception wave.

According to this conventional art, a fading pitch is measured of a synthesized reception wave having a higher frequency in having the fading occurred than an actual reception wave arriving at the respective branches. Then, the fading pitch measured is used for calculating the fading pitch of an actually arriving reception wave at the respective branches 51. AS a result, a fading pitch may be measured accurately in a short time.

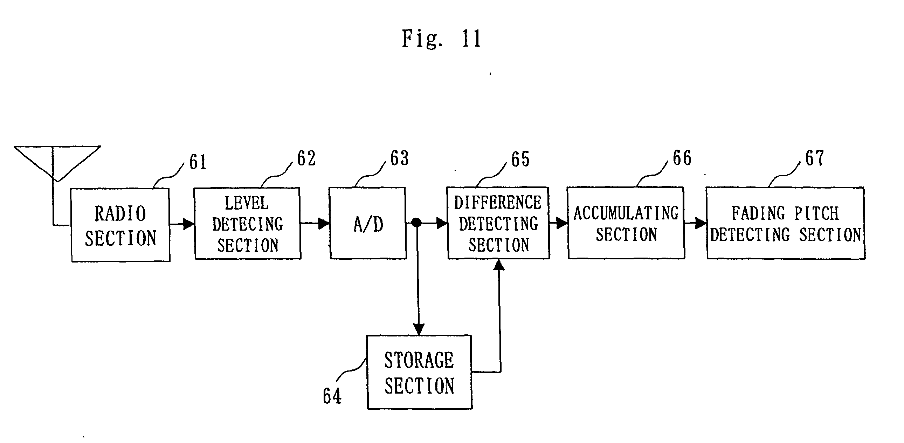

Furthermore, as another conventional fading pitch detection apparatus, Fig. 11 shows a second conventional art as an example. Fig. 11 is a block diagram of a conventional fading pitch detection apparatus disclosed in Japanese Unexamined Patent Publication No. Hei8-79161. Referring to the figure, a reference numeral 61 denotes a radio section for receiving a radio wave. A reference numeral 62 denotes a level detection section for detecting the reception level of the reception signal based upon a timing signal generated in a given cycle. Then, a sampling is performed in an A/D (analog/digital) converter 63 by converting a detected reception level into a digital value. A reference numeral 64 denotes a storage section for holding previously sampled reception signals for each sampling. A reference numeral 65 denotes a difference detection section for calculating a difference between a currently sampled reception level and the previously sampled reception level for each sampling. A reference numeral 66 denotes an accumulating section for obtaining an accumulated value by accumulating the differences successively received for a given period of time.

It is already known that there is a correlation between this accumulated value and a fading pitch. Thus, a correlation table between the fading pitch and the accumulated value is provided previously through experiments. A reference numeral 67 denotes a fading pitch detecting section for converting the accumulated value obtained in the accumulating section 66 into a fading pitch by means of the previously provided correlation table.

According to this conventional art, the accumulated value is obtained by accumulating the differences for a given period of time. For that reason, the accumulated value delicately changes according to the value of a difference. As a result, a high-precision fading pitch may be detected.

According to the first conventional fading pitch detection apparatus, the plurality of branches is required for receiving reception waves which may appear to have no correlation to one another. However, the plurality of branches is not allowed to be provided on such a housing as a mobile information terminal, which is smaller than or the same as the wavelength of a reception frequency. Otherwise, the housing becomes larger in size with the plurality of branches, which is the problem posed by the conventional art.

According to the second conventional fading pitch detection apparatus, the correlation table between the accumulated value and the fading pitch has to be provided. This poses the problem that a large number of memories have to be provided.

An object of a preferred embodiment of the present invention is to propose a fading pitch detection apparatus for obtaining a high-precision fading pitch without using the plurality of branches for receiving reception waves which may appear to have no correlation to one another and to propose the method.

Another object of a preferred embodiment of the present invention is to propose a fading pitch detection apparatus for achieving a high-precision measurement of a fading pitch without using the plurality of branches for receiving reception waves which may appear to have no correlation to one another and without using a large number of memories and to propose the method.

Still another object of a preferred embodiment of the present invention is to propose a fading pitch detection apparatus for measuring a high-precision fading pitch based upon a signal including a fading-based variation without using a large number of memories and to propose the method.

Still another object of a preferred embodiment of the present invention is to propose a mobile information terminal using a fading pitch detection apparatus for achieving a high-precision fading pitch to be obtained without using a plurality of branches for receiving reception waves which may appear to have no correlation to one another.

Still another object of a preferred embodiment of the present invention is to propose a mobile information terminal using a fading pitch detection apparatus for achieving a high-precision measurement of a fading pitch without using a plurality of branches for receiving reception waves which may appear to have no correlation to one another, and without using a large number of memories.

### Disclosure of the Invention

A fading pitch detection apparatus according to the present invention includes a plurality of demodulators, connected to a shared reception system, each for demodulating a reception signal through each multipath, a synthesizer for synthesizing signals outputted from the plurality of demodulators with a phase difference in each multipath being maintained, and a fading pitch detector for detecting a fading pitch based upon an output signal from the synthesizer.

The fading pitch detection apparatus is designed for a CDMA system and the plurality of demodulators is a plurality of despreading devices, connected to the shared reception system, for performing despreading for each multipath.

The fading pitch detector includes an auto-correlation detector for calculating an auto-correlated value of a synthesized output signal from the synthesizer, and a fading pitch estimation device for calculating the fading pitch based upon a comparison result between the auto-correlated value and a predetermined threshold value.

The auto-correlated value is based upon a time difference of the synthesized output signal, and the fading pitch estimation device includes a comparator for obtaining a minimum value of the time difference with which the auto-correlated value is less than the threshold value, and a calculator for calculating the fading pitch based upon the minimum value of the time difference.

The calculator performs a liner operation.

The fading pitch detection apparatus includes a transforming device for transforming the synthesized output signal from the synthesizer to an electric power value, wherein an output signal from the transforming device is inputted to the auto-correlation detector to obtain the fading pitch.

A fading pitch detection apparatus according to the present invention includes a transforming device for transforming an input signal including a fading-based variation to an electric power value, an auto-correlation detector for calculating an auto-correlated value of an output signal from the transforming device, and a fading pitch estimation device for calculating a facing pitch based upon a comparison result between the auto-correlated value and a predetermined threshold value.

The auto-correlated value is based upon a time difference of the output signal from the transforming device, and the fading pitch estimation device includes a comparator for obtaining a minimum value of the time difference with which the auto-correlated value is less than the threshold value, and a calculator for calculating the fading pitch based upon the minimum value of the time difference.

A mobile information terminal according to the present invention includes the fading pitch detection apparatus mentioned above.

A method for detecting a fading pitch according to the present invention includes demodulating a reception signal through each multipath by a shared reception system, synthesizing demodulated signals for each multipath with a phase difference in each multipath being maintained, and detecting a fading pitch based upon a synthesized output signal.

A method for detecting a fading pitch according to the present invention includes transforming an input signal including a fading-based variation to an electric power value, calculating an auto-correlated value of a transformed output signal, comparing the auto-correlated value with a predetermined threshold value, and calculating a fading pitch based upon a comparison result.

### Brief Description of Drawings

Fig. 1 is a block diagram illustrating a first embodiment of the present invention.
Fig. 2 is a diagram illustrating output signals from individual despreading devices on an IQ complex plane according to the first embodiment of the present invention.
Fig. 3 is a diagram illustrating synthesized output signals of the individual despreading devices on an IQ complex plane according to the first embodiment of the present invention.
Fig. 4 is a block diagram illustrating a second embodiment of the present invention.
Fig. 5 is an internal block diagram illustrating an auto-correlation detector according to the second embodiment of the present invention.
Fig. 6 is an internal block diagram illustrating a fading pitch estimation device according to the second embodiment of the present invention.
Fig. 7 is a diagram illustrating a relation between electric power correlated value R (τ) and a delay time τ according to the second embodiment of the present invention.
Fig. 8 is a diagram illustrating a relation between the inverse number of a time difference Tth (1/Tth) and a fading pitch fD according to the second embodiment of the present invention.
Fig. 9 is a block diagram illustrating a third embodiment of the present invention.
Fig. 10 is a block diagram illustrating a first conventional fading pitch detection apparatus.
Fig. 11 is a block diagram illustrating a second conventional fading pitch detection apparatus.

### Best Mode for Carrying out the Invention

### Embodiment 1.

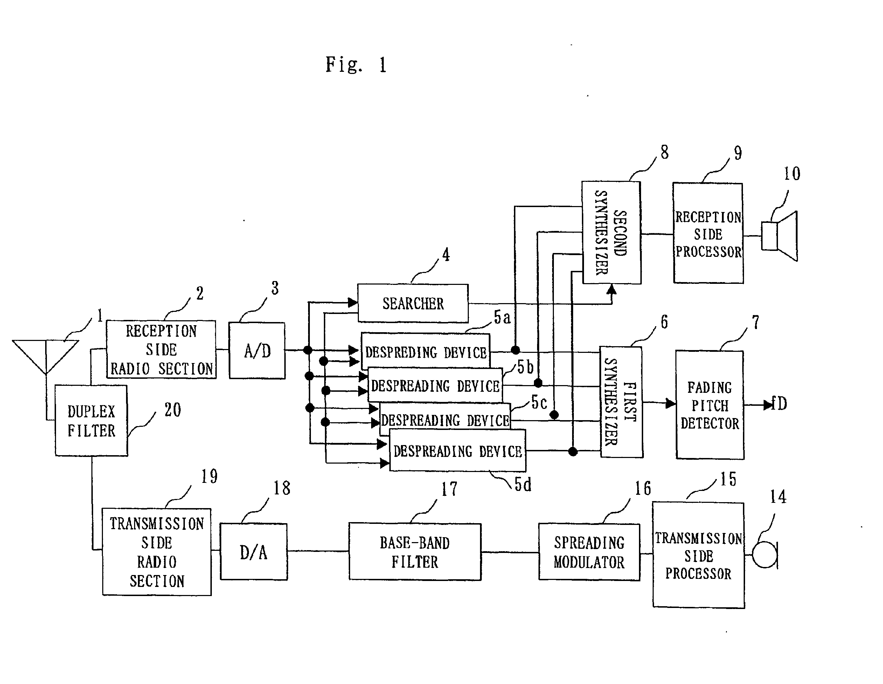

Fig. 1 shows a block diagram of a CDMA-system based mobile station, e.g., a mobile phone with a single antenna, according to a first embodiment. Referring to the figure, a reference numeral 1 denotes an antenna. A reference numeral 2 denotes a reception side radio section, which amplifies a radio wave received through the antenna 1 and converts the radio wave into an intermediate frequency band. A reference numeral 3 denotes an A/D converter. A reference numeral 4 denotes a searcher. A reference numeral 5 indicates a plurality of despreading devices including four separated fingers, for example. An output from the A/D converter 3 is inputted to the searcher 4 and the four despreading devices 5a, 5b, 5c, 5d. In the searcher 4, a correlation timing is obtained between a direct wave and a delay wave of a signal received through each multipath, and then, the correlation timing is notified to the respective despreading devices 5a, 5b, 5c, 5d. The respective despreading devices 5a, 5b, 5c, 5d, based upon the correlation timing notified, perform despreading for the direct wave and the delay wave. A reference numeral 6 denotes a first synthesizer for synthesizing output signals from the respective despreading devices 5a, 5b, 5c, 5d. A reference numeral 7 denotes a fading pitch detector for detecting a fading pitch fD by using a synthesized signal outputted from the first synthesizer 6. The fading pitch detector 7 of the first embodiment uses a conventional art to obtain the fading pitch fD based upon, for example, the theory that the standard deviation of an amount of variation in an input signal level is in proportion to a maximum Doppler frequency of Rayleigh fading. Still more, a typical type of fading to be measured in a mobile station is a Rayleigh fading.

A reference numeral 8 denotes a second synthesizer for synthesizing signals from the respective despreading devices 5a, 5b, 5c, 5d by changing the phase of each signal from the respective despreading devices 5a, 5b, 5c, 5d so as to make the delay time between signals zero. A reference numeral 9 denotes a reception side signal processor for error-correction decoding and voice decoding an output signal from the synthesizer 8. A reference numeral 10 denotes a speaker.

A reference numeral 14 denotes a microphone. A reference numeral 15 denotes a transmission side signal processor for voice coding and error-correction coding. A reference numeral 16 denotes a spreading modulator for spreading and modulating an output from the signal processor 15. A reference numeral 17 denotes a base-band filter. A reference numeral 18 denotes a D/A converter. A reference numeral 19 denotes a transmission side radio section for intermediate-frequency modulation, radio modulation, and signal amplification. A reference numeral 20 denotes a duplex filter for sending a signal received through the antenna 1 to the reception side radio section 2, and sending an output signal from the transmission side radio section 19 to the antenna 1.

The antenna 1, the duplex filter 20, the reception side radio section 2, and the A/D converter 3 form a shared reception system. Besides, the despreading device is an example of demodulator.

Still more, the multipath is to mean that there are a plurality of propagation routes for a radio wave. Those propagation routes include a path by way of which a radio wave transmitted from a transmitting device is directly received through the antenna 1 for reception, and a plurality of paths by way of which two or more reflected waves are received by the antenna 1 for reception as a result of the radio wave being reflected by obstacles such as buildings and mountains. Multiplexed wave propagation (Multipath Propagation) is caused by this multipath. A reflected wave has a longer route-length than that of a direct wave due to the reflection, which causes a delay wave having a phase lag behind the direct wave. The delay wave is inputted to the antenna 1.

An operation is now discussed. A radio wave transmitted from a base station is received at the antenna 1, then inputted by way of the duplex filter 20 to the reception side radio section 2 where to be amplified and converted into an intermediate frequency band, and then processed through the A/D converter 3 to become a reception base-band signal. The received radio wave, as transmitted through a plurality of paths in multipath, includes a direct wave and delay waves such as a reflected wave, a diffracted wave and a refracted wave. For that reason, the reception base-band signal includes a direct wave and a plurality of delay waves. Those waves are inputted to the searcher 4 and the respective despreading devices 5a, 5b, 5c, 5d.

In the searcher 4, a timing of incoming signals is determined for each signal received through the respective paths in multipath by using a signal transmitted from the base station to obtain a correlation timing between the direct wave and the respective delay waves. Then, the correlation timing is notified to the respective despreading devices 5a, 5b, 5c, 5d. In the respective despreading devices 5a, 5b, 5c, 5d, the reception base-band signal is subject to despreading at a specified timing based upon the notified correlation timing. As the despreading devices 5a, 5b, 5c, 5d are formed as four fingers in the first embodiment, one direct wave and three delay waves determined by the searcher 4 are subject to despreading in the respective despreading devices 5a, 5b, 5c, 5d.

A signal outputted from the respective despreading devices 5a, 5b, 5c, 5d, when inputted to the second synthesizer 8, is synthesized by changing the phase so as to make the delay time zero between the respective spread signals based upon the correlation timing notified by the searcher 4. This synthesized signal is inputted to the reception side signal processor 9 where to be processed through error-correction decoding and voice decoding, and then outputted through the speaker 10 as voice.

Voice received through the microphone 14 is subject to voice coding and error-correction coding in the transmission side signal processor 15, and then inputted to the spreading modulator 16 to be spread and modulated. A spread and modulated signal is inputted to the base-band filter 17 where outer-band spectrum in the signal is suppressed, and then inputted by way of the D/A (digital/analog) converter 18 to the transmission side radio section 19. The signal processed through intermediate frequency modulation, radio modulation and signal amplification in the transmission side radio section 19 is transmitted by way of the duplex filter 20 to a radio circuit through the antenna 1.

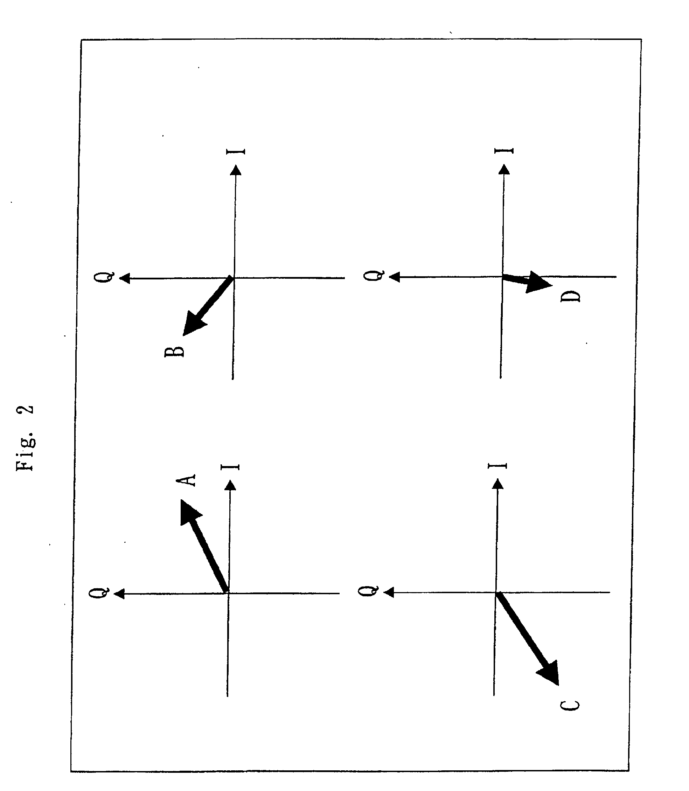

Fig. 2 is a diagram illustrating an example in a moment instance of despread signals outputted from the respective despreading devices 5a, 5b, 5c, 5d represented on an IQ complex plane by vectors, where I indicates a synchronous element, Q indicates an orthogonal element, and the size of a vector indicates an amplitude. Referring to the figure, vectors A, B, C and D represent despread signals, respectively, outputted from the despreading devices 5a, 5b, 5c and 5d. As shown in the figure, those signals have different amplitude levels and different phase levels from one another. With those signals, at least the phases vary on a time base.

As aforementioned, according to the CDMA-system based reception procedure, an output signal from the respective despreading devices 5a, 5b, 5c, 5d is synthesized in the second synthesizer 8 by changing the phase so as to make a delay time between the respective despread signals zero based upon the correlation timing notified by the searcher 4. However, because this synthesized signal has been synthesized so as to make a path based delay time zero, the fading has been suppressed. For that reason, this synthesized signal is not suitable for detecting a fading pitch. In addition to that, the second synthesizer 8 detects an output from the respective fingers (individual despreading devices 5a, 5b, 5c, 5d) and synthesizes the output in such a manner as to cancel a phase rotation added to the signal on the transmission line. As a result, the fading in the signal has been suppressed.

For that reason, when detecting a fading pitch, the output signal from the respective despreading devices 5a, 5b, 5c, 5d is inputted to the first synthesizer 6 to be synthesized directly. As a result, a despread signal corresponding to each multipath is to be synthesized with the phase difference being maintained. Consequently, the synthesized signal as an output from the first synthesizer 6 includes the same fading pitch as that of the radio wave received through the antenna 1. By inputting this synthesized signal to the fading pitch detector 7, the fading pitch fD is detected.

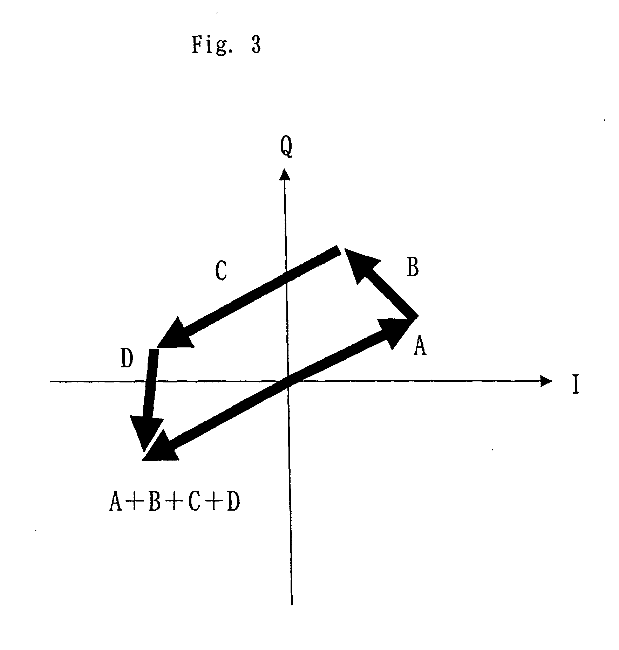

Fig. 3 is a diagram illustrating on an IQ complex plane a synthesized signal obtained by synthesizing the respective despread signals shown in Fig. 2 directly or with a phase difference being maintained. Referring to the figure, a vector A+B+C+D indicates the synthesized signal of the despread signal vectors, vector A, vector B, vector C, and vector D shown in Fig. 2. The thus synthesized signal varies both in amplitude and phase on a time base because at least the phase of the respective despread signals shown in Fig. 2 varies on a time base. In other words, the synthesized signal includes fading-based variations.

With a mobile phone thus operating, a signal received through a single antenna is subject to despreading by the four despreading devices. Then, a fading pitch is detected by using the synthesized signal obtained by directly synthesizing the despread signal with the phase difference being maintained. As a result, a high-precision fading pitch may be detected based upon the signal received through the single antenna.

According to the first embodiment discussed above, the despreading devices 5a, 5b, 5c, 5d are configured as the four fingers. Alternatively, however, the number of the fingers (despreading devices) may be any number two or more, 3, 6, 8 , for example. In that case, the same effect may also be obtained as that discussed above.

### Embodiment 2.

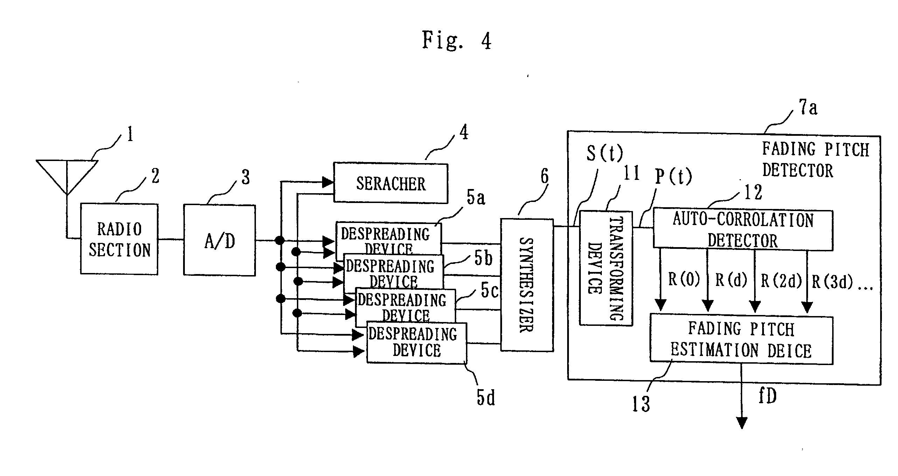

A second embodiment is a CDMA-system based fading pitch detection apparatus equipped with a single antenna. The fading pitch detection apparatus is provided with an improved fading pitch detector 7a. Fig. 4 shows a block diagram of this second embodiment. Referring to Fig. 4, some of the same elements as those of Fig. 1 are not shown. Furthermore, in Fig. 4, the same reference numerals as those of Fig. 1 indicate the same elements as those of Fig. 1, therefore will not be discussed here. A reference numeral 11 denotes a transforming device for transforming a synthesized signal outputted from the synthesizer 6 to electric power. A reference numeral 12 denotes an auto-correlation detector for detecting the auto-correlation of an output signal from the transforming device 11. A reference numeral 13 denotes a fading pitch estimation device for obtaining the fading pitch fD by using an output signal from the auto-correlation detector 12.

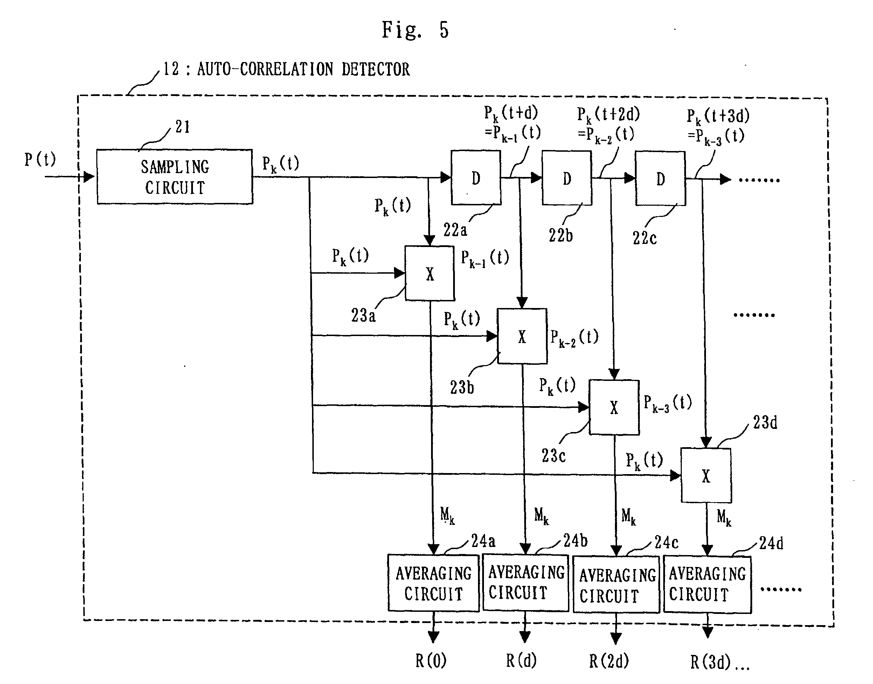

Fig. 5 shows an internal block diagram of the auto-correlation detector 12. Referring to the figure, a reference numeral 21 denotes a sampling circuit for sampling n number of output signals from the transforming device 11. Reference numerals 22a, 22b, 22c, ··· denote m number (m=n-1) of delay circuits for delaying a signal Pₖ (t) outputted from the sampling circuit 21 by a predetermined delay time d. Reference numerals 23a, 23b, 23c, ··· denote multipliers for multiplying a delay time zero signal Pₖ(t) outputted from the sampling circuit 21 by a signal Pₖ (t+τ) having a delay time *τ*(τ*=*0, d, 2d, ··· , md) outputted from the respective delay circuits 22a, 22b, 22c, ···. Reference numerals 24a, 24b, 24c, 24d, ··· denote averaging circuits for adding up outputs from the multipliers 23a, 23b, 23c, ··· and averaging an added value by an add number.

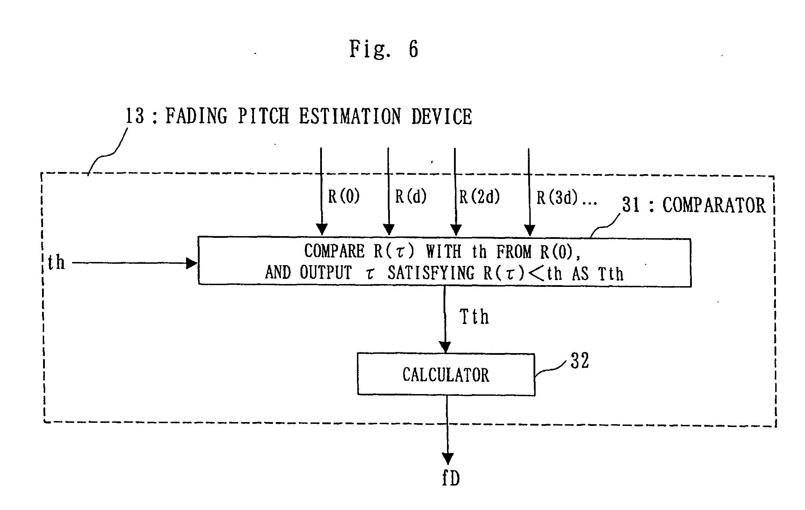

Fig. 6 shows an internal block diagram of the fading pitch estimation device 13. Referring to the figure, a reference numeral 31 denotes a comparator, which compares a predetermined threshold value with the respective output signals from the auto-correlation detector 12 in order at the delay time τ from the minimum value. A reference numeral 32 denotes a calculator, which detects a delay time Tth obtained as the delay time of an auto-correlated value less than the threshold value by the comparator and calculates a fading pitch by using the delay time Tth.

An operation is now discussed. Elements other than the transforming device 11, the auto-correlation detector 12 and the fading pitch estimation device 13 in Fig. 4 are the same as those discussed in the first embodiment. For that reason, descriptions will be made only of operations performed by the transforming device 11 and the auto-correlation detector 12, an internal operation of the auto-correlation detector 12, an operation performed by the fading pitch estimation device 13, and an internal operation of the fading pitch estimation device 13.

A synthesized signal S(t) outputted from the first synthesizer 6 is converted into an electric power value P(t) in the transforming device 11 according to the following equation.$\text{P(t)=} \left|{\text{S(t)}}^{\text{2}}\right|$

This transformed signal P(t) is a real number, and inputted to the auto-correlation detector 12 as a time-series signal. Then, in the sampling circuit 21, n number of time-series signals are sampled at intervals of the delay time d. Hereinafter, k (1≦k≦n) is used as a variable indicating a period for operation. For example, k=1 indicates a first period for operation. The value of k is increased by 1 each time when the delay time d has passed. An output signal from the sampling circuit 21 is inputted to the multiplier 23a. In the multiplier 23a, the delay time zero signals Pₖ(t) of output signals from the sampling circuit 21 are multiplied by themselves. Then, a multiplied value Mₖ is outputted to the averaging circuit 24a. The delay time zero signal Pₖ(t) of the output signal from the sampling circuit 21 is also inputted to the delay circuit 22a and becomes a delayed signal Pₖ₊₁(t+ τ)=Pₖ₊₁(t+d) behind the signal P(t) by τ=d. The delay circuit 22a delays a signal but does not change the value of the signal. Therefore, the value of Pₖ(t) is the same as the value of Pₖ₊₁(t+d).

In the multiplier 23b, the delay time zero signal Pₖ(t), an output signal from the sampling circuit 21, is multiplied by a delay signal Pₖ (t+τ)=Pₖ(t+d), which is delayed by τ=d in the delay circuit 22a, where Pₖ(t+d) indicates that a signal Pₖ₋₁(t) is delayed by d. Therefore, the values of Pₖ(t+d) and Pₖ₋₁(t) are the same. In other words, the multiplier 23b is to multiply signals having a time difference d from each other. An output signal Mₖ from the multiplier 23b is outputted to the averaging circuit 24b.

The following shows the operations of the respective multipliers 23a, 23b, 23c, 23d in each period.
(1) Multiplier 23a (a multiplier for multiplying signals having a time difference 0 from each other)
   When k=1(τ=0), M₁=P₁(t) · P₁(t)
   When k=2(τ=d), M₂=P₂(t) · P₂(t)
   When k=3(τ=2d), M₃=P₃(t) · P₃(t)
   When k=4(τ=3d), M₄=P₄(t) · P₄(t)
(2) Multiplier 23b (a multiplier for multiplying signals having a time difference d from each other)
   When k=1(τ=0), M₁ = no output (0)
   When k=2(τ=d), M₂ = P₂(t) · P₂(t+d)=P₂(t) · P₁(t)
   When k=3(τ=2d), M₃ = P₃(t) · P₃(t+d)=P₃(t) · P₂(t)
   When k=4(τ=3d), M₄ = P₄(t) · P₄(t+d)=P₄(t) · P₃(t)
(3) Multiplier 23c (a multiplier for multiplying signals having a time difference 2d from each other)
   When k=1(τ=0), M₁ = no output (0)
   When k=2(τ=d), M₂ = no output (0)
   When k=3(τ=2d), M₃ = P₃(t) · P₃(t+2d)=P₃(t) · P₁(t)
   When k=4(τ=3d), M₄ = P₄(t) · P₄(t+2d)=P₄(t) · P₂(t)
(4) Multiplier 23d (a multiplier for multiplying signals having a time difference 3d from each other)
   When k=1(τ=0), M₁ = no output (0)
   When k=2(τ=d), M₂ = no output (0)
   When k=3(τ=2d), M₃ = no output (0)
   When k=4(τ=3d), M₄ = P₄(t) · P₄(t+3d)=P₄(t) · P₁(t)

The averaging circuit 24a, 24b, 24c, 24d, ··· adds up n number of values, M1, M2, M3, M4, ··· outputted, respectively, from the multiplier 23a, 23b, 23c, 23d, ···. An added value is averaged by an add number in the averaging circuit 24a, 24b, 24c, 24d, ···, respectively, and then, outputted from the auto-correlation detector 12 as an auto-correlated value R(τ) expressed by Equation 1 below. In Equation 1:
n: the number of samples in an auto-correlation calculation (n>0 and n=1, 2, 3, ···)
τ: a time difference in an auto-correlation calculation (τ>0 and τ=0, d, 2d, 3d, ··· , and when τ=0, R(τ)=(Pₖ(t))²)
j: a value identifying an averaging circuit (1, 2, 3, ···, n)

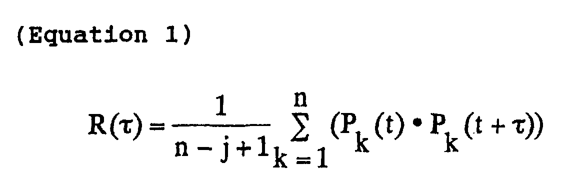

R(τ) indicates an auto-correlated value of the electric power value P(t) with the delay time τ.

When the Equation 1 is applied to the respective operations of the averaging circuits 24a, 24b, 24c, ···, 24n, then the results are as follows.
(1) Averaging circuit 24a (when j=1 and τ=0) 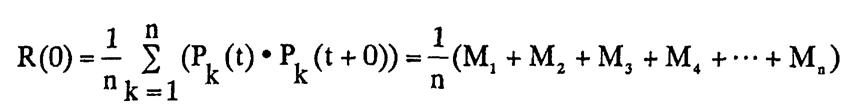
(2) Averaging circuit 24b (when j=2 and τ=d) 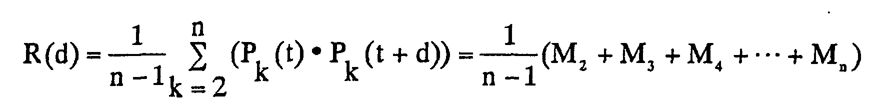
(3) Averaging circuit 24c (when j=3 and τ=2d) 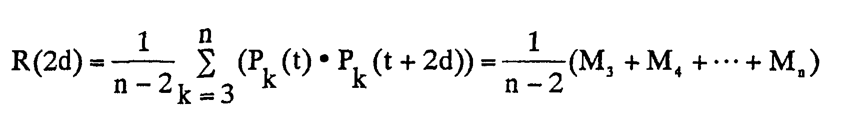
(4) Averaging circuit 24d (when j=4 and τ=3d) 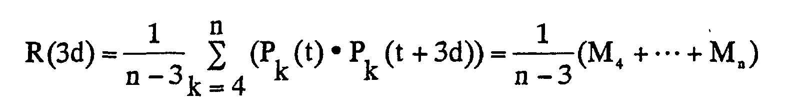 (Omission)
(5) Averaging circuit 24n (when j=n and τ=md)(n=m+1)

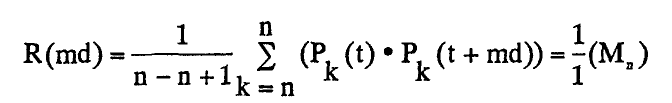

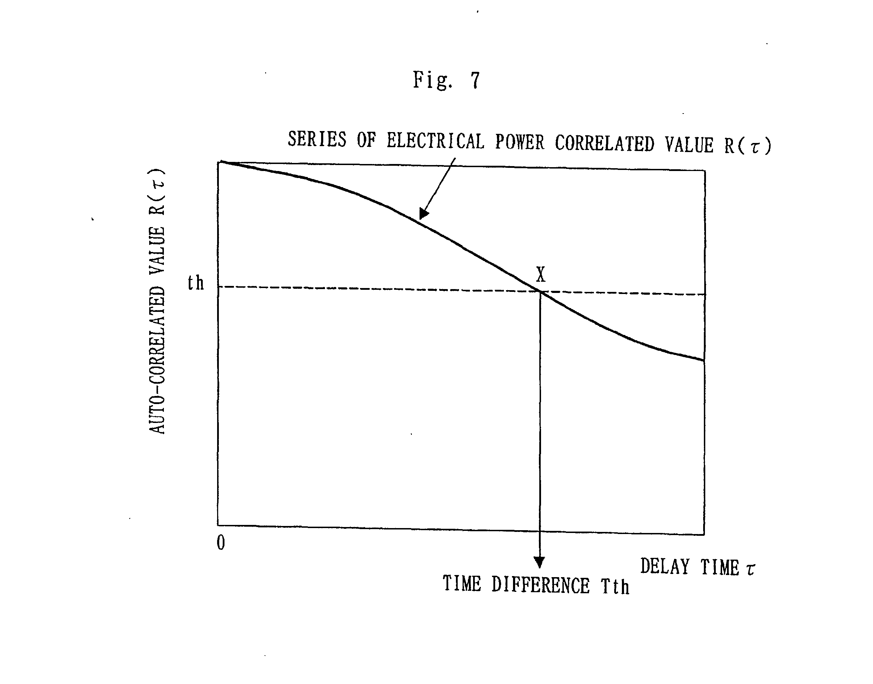

The auto-correlated value R(τ) outputted from the auto-correlation detector 12 is inputted to the comparator 31 in the fading pitch estimation device 13. A series of the auto-correlated values R(τ) are given by the auto-correlation function of the electric power value P(t). In general, the auto-correlation function has the characteristic that the auto-correlated value becomes smaller as the delay time τ becomes longer (R(0)>R(d)>R(2d)>R(3d)>···), as shown in Fig. 7. With reference to Fig. 7, when τ=0, the auto-correlated value R(τ) becomes a maximum value. With further referring to Fig. 7, the threshold value th is assigned a value satisfying the threshold value th =a maximum value × 0.75. In the comparator 31, the auto-correlated value R( τ) is compared with the predetermined threshold value th in order at the delay time τ from the minimum. Then, a delay time at a point X at which the auto-correlated value R( τ) is less than the threshold value th, or a minimum value of the delay time τ less than the threshold value, is outputted as the time difference Tth.

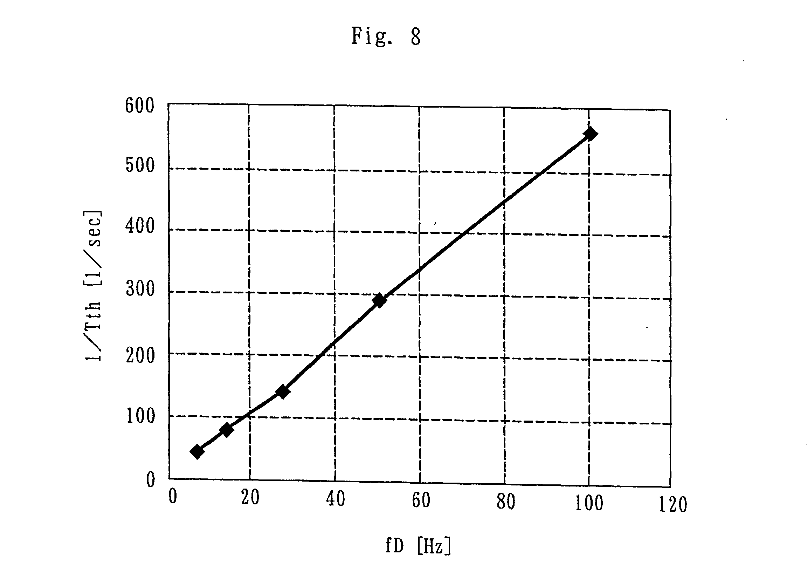

The time difference Tth is inputted to the calculator 32. It is already known that there is a proportional relation, as indicated in Fig. 8, between the inverse number of the time difference Tth (1/Tth) and the fading pitch fD to be obtained. This relation may be expressed by the following Equation 2 where a is a proportional constant. Therefore, the proportional relation shown in Fig. 8 may be obtained by measuring at least two points by means of simulation and calculating the value of the proportional constant a. In the calculation device 32, the fading pitch fD may be obtained through a linear operation alone without using a special conversion table or the like.$\text{(Equation 2)} \text{fD = a •} \frac{\text{1}}{\text{Tth}}$

According to the thus operating fading pitch detection apparatus, a signal received through the single antenna is subject to despreading by the four despreading devices. Then, the fading pitch is detected based upon the synthesized signal obtained by directly synthesizing the despread signal with the phase difference being maintained. As a result, a high-precision fading pitch may be detected based upon the signal received through the single antenna.

Furthermore, from the view point that the inverse number of the time difference Tth (1/Tth) and the fading pitch fD are proportional, the fading pitch is calculated based upon the inverse number of the time difference Tth (1/Tth). As a result, a large number of memories are not required for a conversion table or the like, thereby achieving a high-precision measurement.

Still more, the fading pitch detection apparatus of the second embodiment is also applicable to a CDMA-system based mobile phone. The effect is the same in this case as that discussed above.

The despreading device discussed in the first and the second embodiments is an example of demodulator. In the first and the second embodiments which apply to the CDMA system, the despreading device is used as a demodulator. However, with another type of system, another type of demodulator suitable for that specific system may be used.

Still more, the CDMA system uses a broad band radio wave. for that reason, a multipath based multiplexed wave may be separated more easily than a TDMA (Time Divisional Multiple Access) system. Therefore, the systems discussed in the first and the second embodiments have the positive effect that a more precise fading pitch may be obtained if the multipath based multiplexed wave is easily separated.

### Embodiment 3.

With reference to the second embodiment, the signal to be inputted to the transforming device 11 is the synthesized signal outputted from the first synthesizer 6. However, this input signal may be a base-band signal, which is demodulated by a QPSK modulation based receiver, for example.

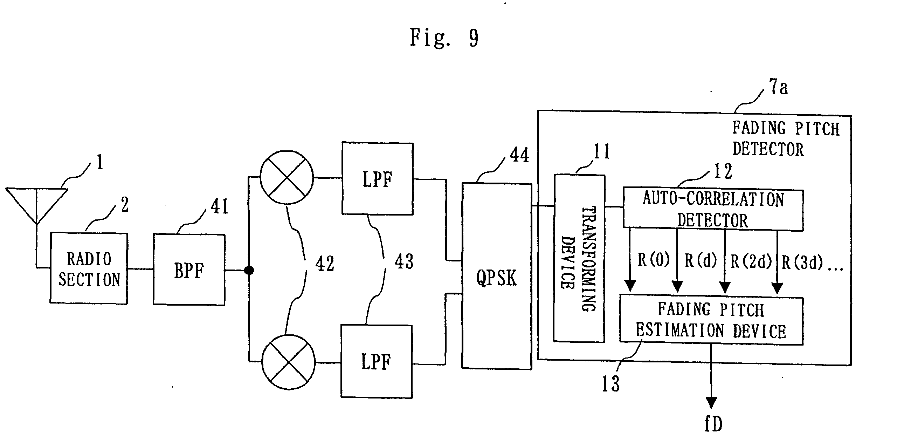

Fig. 9 is a block diagram of a fading pitch detection apparatus according to a third embodiment. Referring to the figure, the same reference numerals as those of Fig. 4 indicate the same elements as those of Fig. 4, therefore will not be reiterated. A radio wave received through the antenna 1 is inputted to the radio section 2. This input signal is amplified and converted into an intermediate frequency band in the radio section 2. Then, after having a portion in an unnecessary frequency band removed from the signal through a band-pass filter 41, the signal is inputted to product circuits 42. The product circuits 42 multiply an input signal by cos ωt and -sin ωt, respectively. The signal inputted to one of the product circuits 42 is outputted as an in-phase component and the signal inputted to the other is outputted as an orthogonal component. Subsequently, the in-phase component and the orthogonal component are both inputted to a QPSK demodulator 44 through a low-pass filter 43 to be judged to generate a base-band signal. This base-band signal is inputted to the transforming device 11, and then processed in the auto-correlation detector 12 and the fading pitch estimation device 13 in the same manner as that discussed in the second embodiment, thereby detecting the fading pitch.

According to the thus operating fading pitch detection apparatus, there is no need of having a large number of memories to be provided for a conversion table and so forth. Besides, the fading pitch of a reception signal received through the antenna may be measured at a high precision.

### Industrial Applicability

The fading pitch detection apparatus and the mobile information terminal according to the preferred embodiment of the present invention are configured as aforementioned. Thus, the reception wave including the respective multipath components is subject to despreading for each multipath. Then, the fading pitch is detected based upon the synthesized signal obtained by synthesizing the despread signals with the phase difference being maintained. As a result, a high-precision fading pitch may be obtained without using two or more branches which may appear to have no correlation to one another.

Furthermore, the fading pitch detection apparatus and the mobile information terminal according to the preferred embodiment of the present invention calculate the fading pitch based upon the comparison result between the auto-correlated value of the synthesized signal and the predetermined threshold value. As a result, a high-precision fading pitch may be measured without using a large number of memories.

Still more, the demodulation (despreading) operation, the synthesizing operation and the fading pitch detecting operation performed by the fading pitch detection apparatus aforementioned may be achieved on a hardware circuit basis, or a software program basis, or on a combined basis of the hardware circuit and the software program. When implementing those operations with a software program, the operations are executed by recording a software program in a storage medium such as a memory, a ROM, a semi-conductor chip, and an IC card, and then reading out the software program by a central Processing Unit (CPU).

## Claims

1. A fading pitch detection apparatus comprising:
a plurality of demodulators, connected to a shared reception system, each for demodulating a reception signal through each multipath;
a synthesizer for synthesizing signals outputted from the plurality of demodulators with a phase difference in each multipath being maintained; and
a fading pitch detector for detecting a fading pitch based upon an output signal from the synthesizer.

2. The fading pitch detection apparatus of claim 1, wherein the fading pitch detection apparatus is designed for a CDMA system, and
wherein the plurality of demodulators is a plurality of despreading devices, connected to the shared reception system, for performing despreading for each multipath.

3. The fading pitch detection apparatus of claim 1, wherein the fading pitch detector includes,
an auto-correlation detector for calculating an auto-correlated value of a synthesized output signal from the synthesizer; and
a fading pitch estimation device for calculating the fading pitch based upon a comparison result between the auto-correlated value and a predetermined threshold value.

4. The fading pitch detection apparatus of claim 3, wherein the auto-correlated value is based upon a time difference of the synthesized output signal; and
wherein the fading pitch estimation device includes,
a comparator for obtaining a minimum value of the time difference with which the auto-correlated value is less than the threshold value, and
a calculator for calculating the fading pitch based upon the minimum value of the time difference.

5. The fading pitch detection apparatus of claim 4, wherein the calculator performs a liner operation.

6. The fading pitch detection apparatus of claim 3, further comprising a transforming device for transforming the synthesized output signal from the synthesizer to electric power,
wherein an output signal from the transforming device is inputted to the auto-correlation detector to obtain the fading pitch.

7. A fading pitch detection apparatus, comprising:
a transforming device for transforming an input signal including a fading-based variation to electric power;
an auto-correlation detector for calculating an auto-correlated value of an output signal from the transforming device; and
a fading pitch estimation device for calculating a facing pitch based upon a comparison result between the auto-correlated value and a predetermined threshold value.

8. The fading pitch detection apparatus of claim 7, wherein the auto-correlated value is based upon a time difference of the output signal from the transforming device, and
wherein the fading pitch estimation device includes,
a comparator for obtaining a minimum value of the time difference with which the auto-correlated value is less than the threshold value, and
a calculator for calculating the fading pitch based upon the minimum value of the time difference.

9. A mobile information terminal, comprising the fading pitch detection apparatus of claim 1.

10. A mobile information terminal, comprising the fading pitch detection apparatus of claim 7.

11. A method for detecting a fading pitch, comprising:
demodulating a reception signal through each multipath by a shared reception system;
synthesizing demodulated signals for each multipath with a phase difference in each multipath being maintained; and
detecting a fading pitch based upon a synthesized output signal.

12. A method for detecting a fading pitch, comprising:
transforming an input signal including a fading-based variation to electric power;
calculating an auto-correlated value of an electric power output signal;
comparing the auto-correlated value with a predetermined threshold value; and
calculating a fading pitch based upon a comparison result.
